# FASCICULE DE BREVET EUROPEEN

(11) **EP 2 179 890 B1**
(45) Date de publication et mention de la délivrance du brevet: **07.10.2015**
(21) Numéro de dépôt: 09173720.5
(22) Date de dépôt: 22.10.2009
(51) Int. Cl.: B60Q 1/26, B60Q 1/32

(54) **Module d'identification pour véhicule automobile**
Identifikationsmodul für Kraftfahrzeug
Identification module for an automobile

(30) Priorité: 23.10.2008 FR 0805883
(43) Date de publication de la demande: 28.04.2010
(73) Titulaire: Valeo Sécurité Habitacle, 94046 Créteil Cedex (FR); Valeo S.p.A., 10026 Santena (TO) (IT)
(72) Inventeur: Aubry, Anthony, 94042 Créteil (FR); Savant, Marco, 94042 Créteil (FR); Savant, Fiorenzo, 94042 Créteil (FR)
(74) Mandataire: Cabinet Novitech

(56) Documents cités:
- EP-A1- 1 609 674
- WO-A2-2008/120067
- DE-A1-102007 016 351
- US-A1- 2004 104 815

## Description

La présente invention est relative à un module d'éclairage destiné à appartenir à un levier de préhension d'un ouvrant, en particulier pour véhicule automobile.

Il est connu d'éclairer le sol à proximité d'un véhicule automobile grâce à une source de lumière intégrée dans un levier de préhension d'un ouvrant de ce véhicule. Cet éclairage permet d'avertir un utilisateur de l'état de la surface sur laquelle il est susceptible de marcher lors de sa montée ou de sa descente du véhicule, par exemple en cas de présence de boue ou d'une flaque d'eau. Le document DE 198 22 733 divulgue l'intégration d'une telle source de lumière dans le levier de préhension. Pour remplir la fonction d'éclairage du sol de manière efficace, il est nécessaire de dimensionner la source de lumière en tenant compte de la distance du sol par rapport à cette source. Or la source de lumière peut émettre des faisceaux de lumière selon plusieurs directions et éclaire alors, outre la zone du sol, une zone située entre le levier de préhension et l'ouvrant du véhicule. La source de lumière n'est pas dimensionnée pour éclairer la partie de l'ouvrant plus proche vis-à-vis de la source de lumière que la zone éclairée du sol, de sorte que la partie de l'ouvrant à proximité du levier de préhension peut être éclairée de manière excessive lors du fonctionnement de la source de lumière. En outre, la réflexion de la lumière peut former une ou plusieurs tâches de lumière irrégulières sur l'ouvrant. Ceci peut donner un aspect globalement peu esthétique au véhicule.

Le document DE 10 2007 016351 décrit un module d'éclairage pour une poignée d'un véhicule, le module comprenant un dispositif d'illumination qui éclaire un renfoncement de poignée et une zone extérieure au véhicule située sur le sol.

L'invention propose un module d'éclairage perfectionné éclairant une zone du sol à proximité du véhicule et une zone située entre le levier de préhension et l'ouvrant et qui permet de s'affranchir au moins partiellement des inconvénients précités.

Un premier objet de l'invention concerne un module d'éclairage d'un levier de préhension d'un ouvrant de véhicule automobile, le module comprenant une première source de lumière formée par au moins une première diode électroluminescente émettant un premier faisceau de lumière orienté essentiellement suivant l'axe de ladite première diode, apte à éclairer une zone du sol située à proximité dudit véhicule ledit module comprenant en outre une seconde source de lumière formée par au moins une seconde diode électroluminescente émettant un second faisceau de lumière orienté essentiellement suivant l'axe de ladite seconde diode transversalement à l'axe de la première diode électroluminescente, apte à éclairer une zone située entre le levier de préhension et l'ouvrant, la seconde source de lumière ayant une puissance lumineuse inférieure à la première source de lumière.

Le module d'éclairage utilise donc deux sources de lumière indépendantes ayant des directions de faisceaux adaptées à éclairer respectivement la zone du sol à proximité du véhicule et la zone située entre le levier de préhension et l'ouvrant du véhicule. Les directions des faisceaux respectifs des deux sources sont sensiblement transversales ou orthogonales entre elles, le faisceau de lumière relatif à la première source est ainsi orienté de sorte que l'éclairage du sol à proximité du véhicule ne vient pas perturber l'éclairage de la zone située entre le levier de préhension et l'ouvrant du véhicule. En outre, comme chaque zone est éclairée par une source de lumière indépendante, le dimensionnement de chaque source de lumière est fonction des caractéristiques de la zone respective à éclairer (par exemple en fonction de la distance de la source de lumière vis-à-vis de la zone à éclairer). Ainsi, l'éclairage de la zone du sol à proximité de la poignée et l'éclairage de la zone située entre le levier de préhension et l'ouvrant sont maîtrisés ce qui permet d'améliorer l'esthétique du véhicule lors du fonctionnement du module d'éclairage.

Dans une variante de l'invention, la première source de lumière comprend deux premières diodes électroluminescentes identiques à la seconde diode électroluminescente.

L'utilisation de diodes électroluminescentes identiques permet de standardiser et de rationaliser la fabrication du module d'éclairage.

Dans une autre variante, le module d'éclairage comprend en outre un boîtier de protection et une carte de circuit imprimé sur laquelle sont fixées la première diode électroluminescente et la seconde diode électroluminescente, ladite carte étant agencée dans ledit boîtier de protection.

Le module d'éclairage forme alors un organe monobloc.

Dans une autre variante, la carte de circuit imprimé est recouverte par un matériau de remplissage du boîtier de protection.

Le module d'éclairage forme alors un organe compact et la carte de circuit imprimé est protégée de toute infiltration d'eau ou de poussière.

Dans une autre variante, le boîtier de protection comprend un canal dont l'axe est sensiblement coaxial à l'axe de la seconde diode électroluminescente, pour guider le faisceau de lumière émis par ladite seconde diode vers la zone située entre le levier de préhension et l'ouvrant.

On améliore ainsi l'éclairage de la zone située entre le levier de préhension et l'ouvrant en guidant le faisceau de lumière émis par la seconde diode électroluminescente.

Dans une autre variante, le boîtier de protection comprend un collimateur comportant une lentille convergente agencée transversalement à l'axe de la première diode électroluminescente de sorte que la première diode électroluminescente est située dans le plan focal de la lentille convergente.

Ainsi, on améliore l'éclairage du sol en guidant le faisceau de lumière émis par la première diode électroluminescente dans une direction essentiellement parallèle à l'axe de ladite première diode. On évite également tout éclairage direct de l'ouvrant en dessous du levier de préhension par la première diode électroluminescente.

Dans une autre variante, la carte de circuit imprimé est alimentée électriquement par des moyens d'alimentation s'étendant dans le levier de préhension et reliés à un connecteur, ledit connecteur étant apte à alimenter au moins un capteur intégré dans le levier de préhension.

Ainsi, il est possible d'alimenter plusieurs modules électriques dans le levier de préhension à partir de moyens d'alimentation utilisant un cheminement commun dans le levier.

Un second objet de l'invention concerne un levier de préhension d'un ouvrant de véhicule automobile comprenant un logement comprenant un module d'éclairage selon le premier objet de l'invention, une première ouverture apte à laisser passer le premier faisceau de lumière émis par la première diode électroluminescente, et une seconde ouverture adaptée pour recevoir un canal appartenant au module d'éclairage, l'axe de la seconde ouverture et l'axe du canal étant sensiblement coaxiaux à l'axe de la seconde diode électroluminescente.

En variante, le levier de préhension comprend en outre des moyens de réception complémentaires à des moyens de clipsage du module d'éclairage dans le levier de préhension.

En variante, le levier de préhension est mobile en rotation autour d'un axe parallèle à l'axe de la première diode électroluminescente et le logement de réception du module d'éclairage est dans une partie du levier de préhension située à proximité de l'axe de rotation dudit levier.

On améliore ainsi la protection du module d'éclairage contre toute agression externe, particulièrement lorsque le véhicule est en mouvement.

D'autres caractéristiques et avantages de l'invention ressortiront de la description suivante, donnée à titre d'exemple, sans caractère limitatif, en regard des dessins annexés sur lesquels :
- la figure 1 représente une vue partielle en perspective d'une porte d'un véhicule automobile équipée d'une poignée comportant un module d'éclairage conforme à l'invention;
- la figure 2 représente schématiquement une vue de dessous en coupe transversale de la poignée de la figure 1 comportant un module d'éclairage conforme à l'invention;
- la figure 3 représente schématiquement une vue supérieure d'un module d'éclairage conforme à l'invention;
- la figure 4 est une section du module d'éclairage par un plan vertical suivant une ligne A-A de la figure 3;
- la figure 5 représente schématiquement un module d'éclairage conforme à l'invention et comportant un collimateur au niveau d'une première source de lumière.

Dans la description qui va suivre, des éléments sensiblement identiques ou similaires seront désignés par des références identiques.

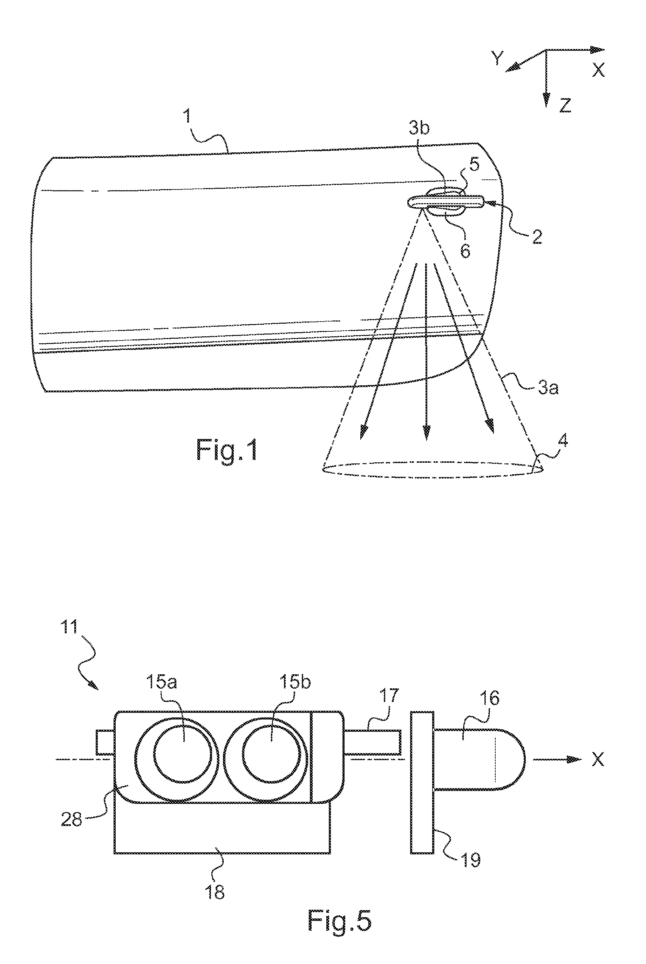

Un repère orthonormal X, Y, Z est défini, dans lequel l'axe X correspond à la direction de déplacement d'un véhicule (pour une meilleure compréhension de la description, on précise que lorsque le véhicule se déplace en marche avant, le sens de déplacement de ce véhicule est opposé au sens de la flèche associée à l'axe X de la figure 1), l'axe Y est un axe traversant le véhicule de part en part et l'axe Z est un axe vertical.

La figure 1 représente une vue partielle en perspective d'un ouvrant 1 équipé d'une poignée 2. L'ouvrant 1 appartient à un véhicule, par exemple, une automobile ou un camion. Le terme ouvrant englobe non seulement les portes permettant l'accès à l'habitable du véhicule mais également le couvercle du coffre associé audit véhicule. La poignée 2 comprend un module d'éclairage (non représenté sur cette figure). Le module d'éclairage émet un premier faisceau de lumière 3a apte à éclairer une zone du sol 4 située à proximité du véhicule. Le module d'éclairage émet également un second faisceau de lumière 3b apte à éclairer une zone 5 située entre le levier de préhension 2b et une partie de l'ouvrant communément appelée le bol 6 qui forme un creux et dans lequel la main d'un utilisateur désirant ouvrir l'ouvrant 1 peut s'engager.

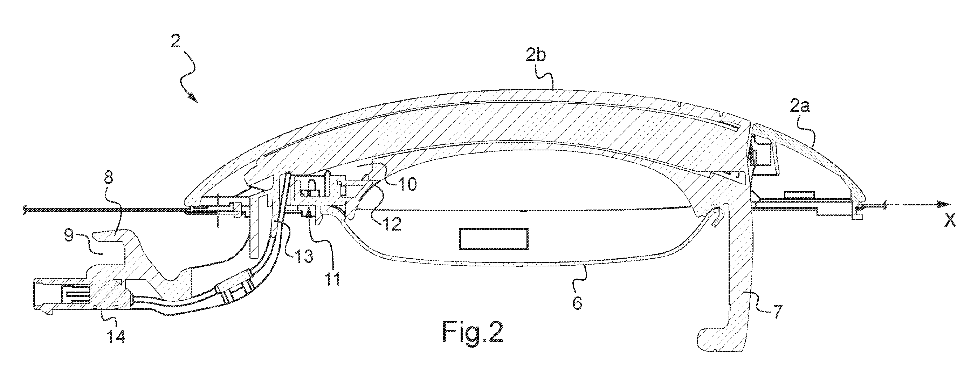

La figure 2 représente schématiquement une vue en coupe transversale de la poignée 2. La poignée 2 est ici une poignée de type « frigo » comprenant une partie fixe formant un capuchon 2a et une partie mobile formant un levier de préhension 2b.

Le levier de préhension 2b comprend à l'avant (en référence au sens de l'axe X) un élément en forme de pied 7 s'étendant transversalement par rapport à l'axe X et qui est apte à coopérer avec une tringlerie (non représentée) d'ouverture/fermeture de l'ouvrant 1. Le levier de préhension 2b comprend également à l'arrière un élément en forme de patte d'oie 8 comprenant une cavité 9 apte à revoir un axe (non représenté) s'étendant sensiblement transversalement au plan formé comprenant les axes X et Y. Lorsque l'utilisateur agit sur le levier de préhension 2b pour ouvrir l'ouvrant, celui-ci devient mobile en rotation autour de l'axe reçu par la cavité 9. L'élément en forme de pied 7 se déplace vers l'utilisateur et déclenche l'ouverture de l'ouvrant 1.

L'élément de préhension 2b comporte également un logement 10 apte à recevoir un module d'éclairage 11 conforme à l'invention. Le logement 10 est ici situé dans une partie du levier de préhension 2b située à proximité de l'axe de rotation dudit levier 2b. Cette disposition particulière permet une meilleure protection du module d'éclairage 11 contre les intempéries et la poussière lorsque le véhicule se déplace. En variante, le module d'éclairage 11 est situé dans une partie du levier de préhension 2b à proximité de l'élément en forme de pied 7.

L'élément de préhension 2b comprend également une première ouverture (non visible) apte à laisser passer le premier faisceau de lumière 3a émis en direction du sol et une seconde ouverture 12 apte à laisser passer le second faisceau de lumière 3b pour éclairer la zone située entre l'élément de préhension 2b et le bol 6. La seconde ouverture permet une communication entre le logement 10 d'une part et d'autre part l'espace situé entre une surface interne de l'élément de préhension 2b et le bol 6.

Des moyens 13 d'alimentation électrique du module d'éclairage 11 débouchent dans le logement 10. En amont du logement 10, ces moyens d'alimentation 13 s'étendent dans le levier de préhension 2b et sont connectés à un connecteur 14. Ce connecteur 14 est apte à alimenter également au moins un capteur intégré dans le levier de préhension 2b, par exemple un capteur de proximité. Le connecteur 14 est relié à des moyens de commande (non représentés) pour le contrôle du module d'éclairage 11.

La poignée représentée à la figure 2 est une poignée de type « Frigo », bien entendu l'invention peut concerner toute sorte de poignée apte à loger un module d'éclairage conforme à l'invention, comme par exemple une poignée de type « palette ».

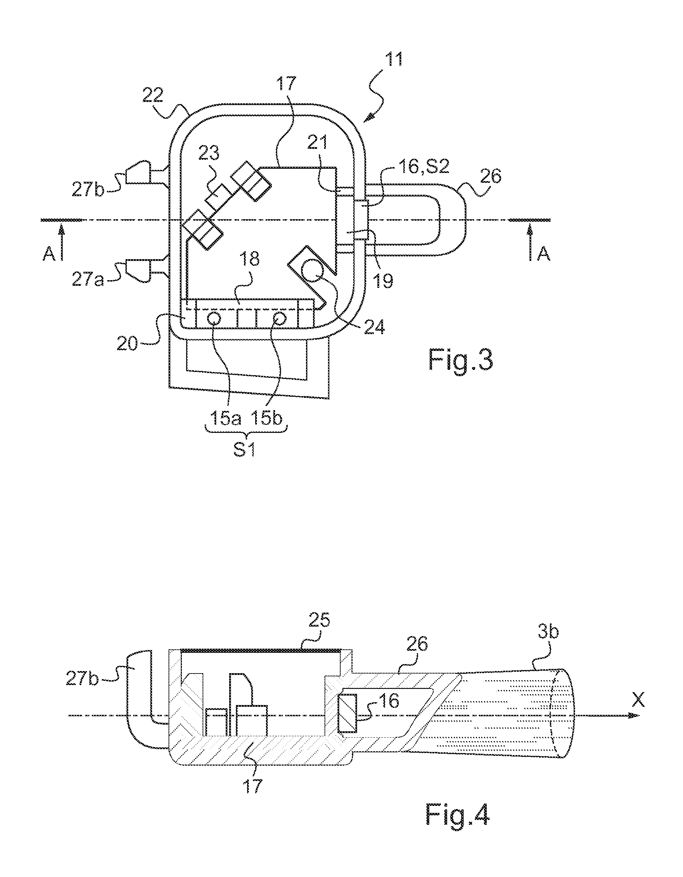

On va décrire maintenant un module d'éclairage conforme à l'invention à partir des figures 3 et 4.

Le module d'éclairage 11 comporte une première source de lumière S1 formée par au moins une première diode électroluminescente. Sur la figure 3, on a représenté une source de lumière S1 comportant deux premières diodes électroluminescentes 15a, 15b décalées axialement. La première source de lumière S1 émet deux premiers faisceaux de lumière essentiellement suivant les axes optiques respectifs des premières diodes électroluminescentes 15a, 15b en direction du sol. Chaque faisceau de lumière forme un cône de lumière dont l'axe de révolution est sensiblement confondu avec l'axe optique de la première diode électroluminescente respective. L'utilisation de deux diodes électroluminescentes permet à la première source de lumière d'éclairer plus largement la zone du sol 4 à proximité du véhicule.

Le module d'éclairage 11 comporte également une seconde source de lumière S2 comprenant ici une seule seconde diode électroluminescente 16. La seconde source de lumière S2 émet le second faisceau de lumière 3b essentiellement suivant l'axe optique de la seconde diode électroluminescente 16 pour éclairer la zone 5 située entre le levier de préhension 2b et l'ouvrant 1 du véhicule. La seconde source de lumière S2 émet donc le second faisceau de lumière transversalement à l'orientation du premier faisceau de lumière émis par la première source de lumière S1. Ainsi, chaque zone est éclairée par une source de lumière bien déterminée.

Les diodes électroluminescentes des différentes sources sont de même puissance électrique, par exemple cinq lumens. Dans ce cas, le bol 6 est éclairé par une première source de lumière de puissance cinq lumens et le sol est éclairé par une seconde source de lumière de puissance dix lumens. On s'assure ainsi que le bol 6 n'est pas éclairé de manière excessive tout en éclairant suffisamment le sol. De plus, l'utilisation de diodes électroluminescentes identiques permet de standardiser et de rationaliser la fabrication du module d'éclairage 11. Bien entendu, le nombre de diodes électroluminescentes présent pour chaque source de lumière ainsi que leur puissance respective sont choisis en fonction de l'éclairage désiré de la zone 5 située entre le levier de préhension 2b et le bol 6 et de la zone 4 du sol à proximité du véhicule.

Sur la figure 3, on a représenté les premières diodes électroluminescentes 15a, 15b et la seconde diode électroluminescente 16 raccordées mécaniquement et électriquement à une carte de circuit imprimé 17 qui est apte à être reliée aux moyens d'alimentation 13 du levier de préhension 2b. Plus particulièrement, les diodes électroluminescentes 15a, 15b, 16 sont raccordées respectivement à la carte de circuit imprimé 17 par l'intermédiaire de platines 18, 19. Chaque platine 18, 19 est de forme rectangulaire et est fixée à la carte de circuit imprimé 17 par collage ou clipsage. Des moyens d'étanchéités 20, 21 sont prévus autour des platines 18, 19 afin de protéger les diodes électroluminescentes 15a, 15b, 16 respectives des infiltrations d'eau.

La carte de circuit imprimé 17 est ici agencée dans un boîtier de protection 22. Ce boîtier de protection 22 délimite un espace creux interne entourant la carte de circuit imprimé 17. Le boîtier de protection 22 comprend des pions de détrompage 23, 24 pour faciliter le montage de la carte de circuit imprimé 17 dans ledit boîtier 22.

Sur la figure 4, on voit que la carte de circuit imprimé 17 est recouverte par un matériau de remplissage 25 (appelé « potting » en anglais). Ce matériau de remplissage 25 se présente ici sous la forme d'une résine polyuréthane bi-composants qui est semi liquide lors du remplissage du boîtier 22 et qui se durcit ensuite par réaction chimique entre les composants, pour constituer un module d'éclairage compact. Cette résine est isolante électriquement et participe également à la dissipation de la chaleur générée par la carte de circuit imprimé 17 et par les diodes électroluminescentes 15a, 15b, 16. En outre, le matériau de remplissage 25 protège le circuit imprimé 17 de toute infiltration d'eau ou de poussière.

Le boîtier de protection 22 tel que représenté aux figures 3 et 4 comprend à l'avant sur sa paroi externe un canal 26 de forme cylindrique dont l'axe est sensiblement coaxial à l'axe de la seconde diode électroluminescente 16. Le canal 26 est apte à pénétrer dans la seconde ouverture 12 du levier de préhension 2b lorsque le module d'éclairage est logé dans ledit levier, afin de guider le faisceau de lumière émis par la seconde diode électroluminescente16 vers la zone située entre le levier de préhension 2b et le bol 6. Le canal 26 est en matière plastique transparente et est fixé par collage ou clipsage sur le boîtier de protection 22. On notera, en référence à la figure 4, la forme particulière de l'extrémité du canal 26 complémentaire à la forme concave de la surface interne du levier de préhension 2b. Grâce à cet agencement, le canal 26 ne comporte pas de partie en saillie dans la zone située entre le levier de préhension 2b et le bol 6 ce qui évite toute gêne pour l'utilisateur lorsque celui-ci agit sur le levier de préhension 2b. Dans un mode particulier de réalisation, le canal 26 comporte en plus une fenêtre transparente destinée à empêcher toute remontée d'eau ou de poussière à travers le canal 26.

Le boîtier de protection 22 comprend également à l'arrière sur sa paroi externe des moyens de clipsage 27a, 27b destinés à la fixation du module d'éclairage 11 dans le levier de préhension 2b de l'ouvrant 1. Ces moyens de clipsage 27a, 27b se présentent, sur la figure 3, sous la forme de deux pattes élastiques. Chaque patte est rattachée au niveau inférieur du boîtier de protection 22 et comprend à son extrémité une protubérance apte à venir se loger dans des moyens de réception complémentaires (non représentés) appartenant au levier de préhension 2b. Les moyens de clipsage 27a, 27b sont par exemple venus de matière par moulage avec le boîtier de protection 22.

La figure 5 représente le module d'éclairage 11 conforme à l'invention avec un collimateur 28. Le collimateur 28 guide les rayons de lumière du faisceau émis par les premières diodes électroluminescentes 15a, 15b. Le collimateur 28 est ici formé par un corps dans lequel ont été usinées deux ouvertures de forme conique. Les axes de révolution des cônes usinés sont respectivement coaxiaux aux axes des premières diodes 15a, 15b. Dans une variante de révolution, les ouvertures du collimateur 28 ont une forme parabolique.

Les ouvertures du collimateur 28 guident les rayons de lumière émis par les premières diodes électroluminescentes 15a, 15b associées vers deux lentilles convergentes (non représentées) appartenant au collimateur 28. Les lentilles convergentes sont agencées transversalement à l'axe des premières diodes électroluminescentes 15a, 15b respectives de sorte que chaque première diode électroluminescente 15a, 15b est située dans le plan focal de la lentille convergente associée. Ainsi, les rayons de lumière des faisceaux associés aux premières diodes électroluminescentes 15a, 15b sont émis dans une direction essentiellement parallèle à l'axe desdites premières diodes.

Le collimateur 28 est clipsé à la platine 18 relative aux premières diodes électroluminescentes 15a, 15b.

Dans une variante de réalisation, le collimateur 28 est venu de matière avec le boîtier de protection 22 du module d'éclairage 11.

## Revendications

1. Module d'éclairage d'un levier de préhension (2b) d'un ouvrant (1) de véhicule automobile, ledit module (11) comprenant :
- une première source de lumière (S1) formée par au moins une première diode électroluminescente (15a, 15b) émettant un premier faisceau de lumière (3a) orienté essentiellement suivant l'axe de ladite première diode (15a, 15b), apte à éclairer une zone du sol (4) située à proximité dudit véhicule,
- une seconde source de lumière (S2) formée par au moins une seconde diode électroluminescente (16) émettant un second faisceau de lumière (3b) orienté essentiellement suivant l'axe de ladite seconde diode (16) transversalement à l'axe de la première diode électroluminescente (15a, 15b), apte à éclairer une zone (5) située entre le levier de préhension (2b) et l'ouvrant (1),
**caractérisé en ce que** la seconde source de lumière (S2) a une puissance lumineuse inférieure à la première source de lumière (SI).

2. Module d'éclairage selon la revendication 1 dans lequel la première source de lumière (S1) comprend deux premières diodes électroluminescentes (15a, 15b) identiques à la seconde diode électroluminescente (16).

3. Module d'éclairage selon la revendication 1 comprenant en outre un boîtier de protection (22) et une carte de circuit imprimé (17) sur laquelle sont fixées la première diode électroluminescente (15a, 15b) et la seconde diode électroluminescente (16), ladite carte (17) étant agencée dans ledit boîtier de protection (22).

4. Module d'éclairage selon la revendication 3 dans lequel la carte de circuit imprimé (17) est recouverte par un matériau de remplissage (25) du boîtier de protection (22).

5. Module d'éclairage selon la revendication 3 dans lequel le boîtier de protection (22) comprend un canal (26) dont l'axe est sensiblement coaxial à l'axe de la seconde diode électroluminescente (16), pour guider le faisceau de lumière émis par ladite seconde diode (16) vers la zone (5) située entre le levier de préhension (2b) et l'ouvrant (1).

6. Module d'éclairage selon la revendication 3 dans lequel le boîtier de protection (22) comprend un collimateur (28) comportant une lentille convergente agencée transversalement à l'axe de la première diode électroluminescente (16) de sorte que la première diode électroluminescente (16) est située dans le plan focal de la lentille convergente.

7. Module d'éclairage selon la revendication 3 dans lequel la carte de circuit imprimé (17) est alimentée électriquement par des moyens d'alimentation (13) s'étendant dans le levier de préhension (2b) et reliés à un connecteur (14), ledit connecteur (14) étant apte à alimenter au moins un capteur intégré dans le levier de préhension (2b).

8. Levier de préhension d'un ouvrant (1) de véhicule automobile comprenant :
- un logement (10) comprenant un module d'éclairage (11) selon l'une des revendications 1 à 7,
- une première ouverture apte à laisser passer le premier faisceau de lumière émis par la première diode électroluminescente (15a, 15b),
- une seconde ouverture (12) adaptée pour recevoir un canal (26) appartenant au module d'éclairage (11), l'axe de la seconde ouverture (12) et l'axe du canal (26) étant sensiblement coaxiaux à l'axe de la seconde diode électroluminescente (16).

9. Levier de préhension selon la revendication précédente comprenant en outre des moyens de réception complémentaires à des moyens de clipsage (27a, 27b) du module d'éclairage (11) dans le levier de préhension.

10. Levier de préhension selon la revendication 8, ledit levier (2b) étant mobile en rotation autour d'un axe parallèle à l'axe de la première diode électroluminescente (15a, 15b), le logement (10) de réception du module d'éclairage (11) étant dans une partie du levier de préhension (2b) située à proximité de l'axe de rotation dudit levier (2b).

## Patentansprüche

1. Beleuchtungsmodul eines Griffhebels (2b) einer Kraftfahrzeugtür (1), wobei das Modul (11) Folgendes umfasst:
- eine erste Lichtquelle (S1), gebildet von mindestens einer ersten lichtemittierenden Diode (15a, 15b), die ein erstes Lichtbündel (3a) abstrahlt, das im Wesentlichen längs der Achse der ersten Diode (15a, 15b) orientiert ist, dafür geeignet, einen Bereich des Bodens (4) in der Nähe des Fahrzeugs zu beleuchten,
- eine zweite Lichtquelle (S2), gebildet von mindestens einer zweiten lichtemittierenden Diode (16), die ein zweites Lichtbündel (3b) abstrahlt, das im Wesentlichen längs der Achse der zweiten Diode (16), quer zur Achse der ersten lichtemittierenden Diode (15a, 15b), orientiert ist, dafür geeignet, einen Bereich (5) zwischen dem Griffhebel (2b) und der Tür (1) zu beleuchten,
**dadurch gekennzeichnet, dass**
die zweite Lichtquelle (S2) eine Leuchtkraft aufweist, die kleiner als die der ersten Lichtquelle (S1) ist.

2. Beleuchtungsmodul nach Anspruch 1, wobei die erste Lichtquelle (S1) zwei erste lichtemittierende Dioden (15a, 15b) umfasst, die der zweiten lichtemittierenden Diode (16) gleich sind.

3. Beleuchtungsmodul nach Anspruch 1, das außerdem ein Schutzgehäuse (22) und eine Leiterplatte (17), auf der die erste lichtemittierende Diode (15a, 15b) und die zweite lichtemittierende Diode (16) befestigt sind, umfasst, wobei die Leiterplatte (17) in dem Schutzgehäuse (22) angeordnet ist.

4. Beleuchtungsmodul nach Anspruch 3, wobei die Leiterplatte (17) mit einem Füllmaterial (25) des Schutzgehäuses (22) bedeckt ist.

5. Beleuchtungsmodul nach Anspruch 3, wobei das Schutzgehäuse (22) einen Kanal (26) umfasst, dessen Achse im Wesentlichen koaxial zur Achse der zweiten lichtemittierenden Diode (16) ist, um das von der zweiten Diode (16) abgestrahlte Lichtbündel zu dem Bereich (5) zu leiten, der sich zwischen dem Griffhebel (2b) und der Tür (1) befindet.

6. Beleuchtungsmodul nach Anspruch 3, wobei das Schutzgehäuse (22) einen Kollimator (28) mit einer Sammellinse umfasst, die quer zu Achse der ersten lichtemittierenden Diode (16) angeordnet ist, derart, dass sich die erste lichtemittierende Diode (16) in der Brennebene der Sammellinse befindet.

7. Beleuchtungsmodul nach Anspruch 3, wobei die Leiterplatte (17) von Stromversorgungsmitteln (13), die sich im Griffhebel (2b) erstrecken und mit einem Verbinder (14) verbunden sind, mit Strom versorgt wird, wobei der Verbinder (14) dafür geeignet ist, mindestens einen in den Griffhebel (2b) integrierten Sensor mit Strom zu versorgen.

8. Griffhebel einer Kraftfahrzeugtür (1), der Folgendes umfasst:
- einen Aufnahmesitz (10), umfassend ein Beleuchtungsmodul (11) nach einem der Ansprüche 1 bis 7,
- eine erste Öffnung, die dafür geeignet ist, das von der ersten lichtemittierenden Diode (15a, 15b) abgestrahlte Lichtbündel hindurchzulassen,
- eine zweite Öffnung (12), die dafür bemessen ist, einen zum Beleuchtungsmodul (11) gehörenden Kanal (26) aufzunehmen, wobei die Achse der zweiten Öffnung (12) und die Achse des Kanals (26) im Wesentlichen koaxial zur Achse der zweiten lichtemittierenden Diode (16) sind.

9. Griffhebel nach dem vorhergehenden Anspruch, außerdem Aufnahmemittel umfassend, die komplementär zu Mitteln zum Einrasten (27a, 27b) des Beleuchtungsmoduls (11) im Griffhebel sind.

10. Griffhebel nach Anspruch 8, wobei der Hebel (2b) um eine Achse parallel zur Achse der ersten lichtemittierenden Diode (15a, 15b) drehbeweglich ist, wobei der Aufnahmesitz (10) des Beleuchtungsmoduls (11) in einem Teil des Griffhebels (2b) ist, der sich in der Nähe der Drehachse des Hebels (2b) befindet.

## Claims

1. Lighting module of a gripping lever (2b) of an opening (1) of a motor vehicle, said module (11) comprising:
- A first light source (S1) formed by at least one first light emitting diode (15a, 15b) emitting a first light beam (3a) oriented substantially along the axis of said first diode (15a, 15b) adapted to illuminate an area of ground (4) in the vicinity of said vehicle,
- a second light source (S2) formed by at least one second light emitting diode (16) emitting a second light beam (3b) substantially oriented along the axis of said second diode (16) transversely to the axis of the first light emitting diode (15a, 15b) adapted to illuminate an area (5) between the gripping lever (2b) and the opening (1), **characterised in that** the second light source (S2) has a luminous power lower than the first source light (S1).

2. Lighting module according to claim 1 wherein the first light source (S1) comprises two first light emitting diodes (15a, 15b) identical to the second light emitting diode (16).

3. Lighting module according to claim 1 further comprising a protective housing (22) and a printed circuit board (17) on which are fixed the first light emitting diode (15a, 15b) and the second light emitting diode (16), said board (17) being arranged in said protective housing (22).

4. Lighting module according to claim 3 wherein the printed circuit board (17) is covered by a filling material (25) of the protective housing (22).

5. Lighting module according to claim 3 wherein the protective housing (22) comprises a channel (26) whose axis is substantially coaxial with the axis of the second light emitting diode (16) for guiding the emitted light beam by said second diode (16) to the area (5) between the gripping lever (2b) and the opening (1).

6. Lighting module according to claim 3 wherein the protective housing (22) comprises a collimator (28) having a convergent lens arranged transversely to the axis of the first light emitting diode (16) so that the first light emitting diode (16) is located in the focal plane of the converging lens.

7. Lighting module according to claim 3 wherein the printed circuit board (17) is electrically supplied by a supply means (13) extending into the gripping lever (2b) and connected to a connector (14), said connector (14) being adapted to supply at least one sensor integrated in the gripping lever (2b).

8. Gripping lever of an opening (1) of a motor vehicle comprising:
- a housing (10) comprising a lighting module (11) according to one of claims 1 to 7,
- a first opening adapted to pass the first light beam emitted from the first light emitting diode (15a, 15b),
- a second opening (12) adapted to receive a channel (26) belonging to the lighting module (11), the axis of the second opening (12) and the axis of the channel (26) being substantially coaxial with the axis of the second light emitting diode (16).

9. Gripping lever according to the preceding claim further comprising additional receiving means clipping means (27a, 27b) of the lighting module (11) in the gripping lever.

10. Gripping lever as claimed in claim 8, wherein said lever (2b) being rotatable about an axis parallel to the axis of the first light emitting diode (15a, 15b), the housing (10) for receiving the light module (11) in part of the gripping lever (2b) in the vicinity of the axis of rotation of said lever (2b).
